# EUROPEAN PATENT APPLICATION

(11) **EP 4 738 395 A1**
(43) Date of publication of application: **06.05.2026**
(21) Application number: 24738577.6
(22) Date of filing: 05.01.2024
(51) Int. Cl.: H01B 13/24, H01B 7/18, H01B 7/20

(54) **PREPARATION METHOD FOR HIGH-VOLTAGE CABLE AND HIGH-VOLTAGE CABLE**

(30) Priority: 06.01.2023 CN 202310021812
(71) Applicant: Zhongtian Technology Submarine Cable Co., Ltd., Jiangsu 226000 (CN)
(72) Inventor: XIA, Yunhai, Nantong, Jiangsu 226000 (CN); HOU, Hongjian, Nantong, Jiangsu 226000 (CN); LU, Wei, Nantong, Jiangsu 226000 (CN); FU, Changqi, Nantong, Jiangsu 226000 (CN); ZHANG, Jianmin, Nantong, Jiangsu 226000 (CN); XIE, Shuhong, Nantong, Jiangsu 226000 (CN); XUE, Chi, Nantong, Jiangsu 226000 (CN)
(74) Representative: J A Kemp LLP
(86) International application number: PCT/CN2024/070939
(87) International publication number: WO 2024/146646

(57) **Abstract**

The present invention provides a preparation method of a high-voltage cable and a high-voltage cable. The preparation method includes: preparing modified polyvinyl chloride, where the modified polyvinyl chloride includes polyvinyl chloride and a filler added to the polyvinyl chloride, and using 100 parts by weight of polyvinyl chloride as a base material, the filler includes the following ingredients in parts by weight: 1-2 parts of polyethylene, 2-3 parts of a filling agent, 2-3 parts of a lubricant and 2-5 parts of a toughening agent; extruding and wrapping the modified polyvinyl chloride around an outer surface of a smooth metal sheath layer to form a modified polyvinyl chloride sheath, the modified polyvinyl chloride sheath being bonded to the smooth metal sheath layer; where the smooth metal sheath layer is wrapped around an outer surface of a cable core. The preparation method of a high-voltage cable provided by the present invention can greatly improve the flame retardant performance of high-voltage cable.

## Description

The present invention claims priority to Chinese Patent Application No. 202310021812.3, filed with the China National Intellectual Property Administration on January 06, 2023, and entitled "PREPARATION METHOD OF HIGH-VOLTAGE CABLE AND HIGH-VOLTAGE CABLE", which is hereby incorporated by reference in its entirety.

### TECHNICAL FIELD

The present invention relates to the technical field of power cables, and in particular, to a preparation method of high-voltage cable and a high-voltage cable.

### BACKGROUND

With the rapid development of cities, high-voltage cables play an important role in the electric power system.

At present, the outer surface of the insulation shielding layer of the cable core in a high-voltage cable is usually wrapped with a cushion layer and a metal sheath layer in sequence. In existing high-voltage cables, a corrugated aluminum sheath is mostly adopted as the metal sheath layer. Studies have shown that the structure of the corrugated aluminum sheath has certain defects, which will lead to gap discharge during the finished product testing. In the research and development process of high-voltage cables, the relevant technologies have proposed using a smooth aluminum sheath to replace the existing corrugated aluminum sheath for covering the outer surface of the cushion layer to form a smooth aluminum sheath cable, so as to increase the contact area between the smooth aluminum sheath and the cushion layer, thereby overcoming the gap discharge phenomenon during the finished product testing.

However, the existing smooth aluminum sheath cables are difficult to meet the requirements for improved flame retardant performance of high-voltage cables.

### SUMMARY

The present invention provides a preparation method of a high-voltage cable and a high-voltage cable, which can meet the requirements for improving the flame retardant performance of the high-voltage cable.

In a first aspect, the present invention provides a preparation method of a high-voltage cable, and the preparation method includes:
preparing modified polyvinyl chloride, where the modified polyvinyl chloride includes polyvinyl chloride and a filler added to the polyvinyl chloride, and using 100 parts by weight of polyvinyl chloride as a base material, the filler includes the following ingredients in parts by weight: 1-2 parts of polyethylene, 2-3 parts of a filling agent, 2-3 parts of a lubricant and 2-5 parts of a toughening agent;
extruding and wrapping the modified polyvinyl chloride around an outer surface of a smooth metal sheath layer to form a modified polyvinyl chloride sheath, the modified polyvinyl chloride sheath being bonded to the smooth metal sheath layer; where the smooth metal sheath layer is wrapped around an outer surface of a cable core.

In some optional implementations, the preparing modified polyvinyl chloride specifically includes:
with 100 parts by weight of polyvinyl chloride as the base material, adding the filler, where a mass ratio of the polyethylene, the filling agent, the lubricant and the toughening agent in the filler is 1:2:2:4, 1:2:3:3 or 2:3:2:2.

In some optional implementations, the extruding and wrapping the modified polyvinyl chloride around an outer surface of a smooth metal sheath layer to form a modified polyvinyl chloride sheath specifically includes:
extruding and wrapping the modified polyvinyl chloride around the outer surface of the smooth metal sheath layer by an extruder to form the modified polyvinyl chloride sheath;
where during extrusion process, by adjusting a barrel heating temperature and a head heating temperature of the extruder, the extruder is controlled to reach a melting temperature of the modified polyvinyl chloride when extruding the modified polyvinyl chloride.

In some optional implementations, the melting temperature of the modified polyvinyl chloride is greater than or equal to 175°C and less than or equal to 185°C;
the barrel heating temperature of the extruder is greater than or equal to 160°C and less than or equal to 180°C, and the head heating temperature of the extruder is greater than or equal to 180°C or equal to 200°C.

In some optional implementations, before the extruding and wrapping the modified polyvinyl chloride around the outer surface of the smooth metal sheath layer to form the modified polyvinyl chloride sheath, the preparation method further includes:
preparing polyester hot melt adhesive;
extruding and wrapping the polyester hot melt adhesive around the outer surface of the smooth metal sheath layer to form a hot melt adhesive layer, where the modified polyvinyl chloride sheath is bonded to the smooth metal sheath layer via the hot melt adhesive layer.

In some optional implementations, the preparing polyester hot melt adhesive specifically includes:
subjecting thermoplastic polyester to an alcoholysis treatment, an acetification treatment, a heating treatment and a cooling treatment in sequence to form the polyester hot melt adhesive.

In some optional implementations, the alcoholysis treatment is an alcoholysis performed by adding an alcoholysis solution to the thermoplastic polyester;
based on 100 parts by weight of the thermoplastic polyester, the alcoholysis solution includes the following ingredients in parts by weight: 20 parts of an alcohol solution and 2-3 parts of a first catalyst.

In some optional implementations, the acetification treatment includes adding an acidolysis solution to a material that has completed the alcoholysis treatment, and heating until the material in the acetification treatment is completely dissolved;
based on 100 parts by weight of the thermoplastic polyester, the acidolysis solution includes the following ingredients in parts by weight: 80 parts of an acid solution, 4-6 parts of a second catalyst and 2-4 parts of a first antioxidant.

In some optional implementations, before the extruding and wrapping the modified polyvinyl chloride around an outer surface of a smooth metal sheath layer to form a modified polyvinyl chloride sheath, the preparation method further includes:
preparing an elastic buffer material having semi-conductive property;
extruding and wrapping the elastic buffer material around an outer surface of an insulation shielding layer of the cable core to form a semi-conductive elastomer buffer layer, where the smooth metal sheath layer is in contact with the insulation shielding layer via the semi-conductive elastomer buffer layer.

In some optional implementations, the preparing an elastic buffer material having semi-conductive property specifically includes:
mixing the following raw materials in parts by weight: 100 parts of elastomer rubber, 20 parts of a rubber-plastic foaming material, 35-40 parts of styrene-butadiene rubber, 25-30 parts of a filling and reinforcing agent, and 2-5 parts of a second antioxidant to prepare the elastic buffer material.

In some optional implementations, the elastomer rubber is a rubber formed by a copolymer of ethylene, propylene and non-conjugated diene, the rubber-plastic foaming material is a plastic formed by copolymerization of ethylene and acetic acid, and the filling and reinforcing agent is carbon black.

In a second aspect, the present invention provides a high-voltage cable, which is prepared by the preparation method as described in any one of the above. The high-voltage cable includes a cable core, the cable core has an outer surface wrapped with a smooth metal sheath layer and a sheath in sequence along an axial direction of the cable core, the sheath is a modified polyvinyl chloride sheath, the modified polyvinyl chloride sheath is wrapped around an outer surface of the smooth metal sheath layer and bonded to the smooth metal sheath layer; the modified polyvinyl chloride sheath is prepared from modified polyvinyl chloride, and the modified polyvinyl chloride includes polyvinyl chloride and a filler added to the polyvinyl chloride;
using 100 parts by weight of polyvinyl chloride as a base material, the filler includes the following ingredients in parts by weight: 1-2 parts of polyethylene, 2-3 parts of a filling agent, 2-3 parts of a lubricant and 2-5 parts of a toughening agent.

In some optional implementations, the high-voltage cable further includes a hot melt adhesive layer, where the hot melt adhesive layer is located between the smooth metal sheath layer and the modified polyvinyl chloride sheath to bond the modified polyvinyl chloride sheath and the smooth metal sheath layer; the hot melt adhesive layer is an adhesive layer formed by polyester hot melt adhesive, and the polyester hot melt adhesive is polyester adhesive formed by subjecting thermoplastic polyester to an alcoholysis treatment, an acetification treatment, a heating treatment and a cooling treatment in sequence.

In some optional implementations, the outer surface of the cable core is further wrapped with a semi-conductive buffer layer along the axial direction of the cable core, which is a semi-conductive elastomer buffer layer; the cable core includes an insulation shielding layer; and the smooth metal sheath layer is in contact with the insulation shielding layer via the semi-conductive elastomer buffer layer.

The present invention provides a preparation method of a high-voltage cable and a high-voltage cable. In the preparation method of the present invention, the mechanical properties of the polyvinyl chloride can be improved by preparing modified polyvinyl chloride, so that the mechanical performance index of the modified polyvinyl chloride is relatively close to the mechanical performance of polyethylene for preparing a smooth aluminum sheath in the existing high-voltage cable. Thus, when the modified polyvinyl chloride is extruded and wrapped around the outer surface of the smooth metal sheath layer to form a modified polyvinyl chloride sheath, the mechanical performance of the formed modified polyvinyl chloride sheath, such as mechanical strength and toughness, can reach the mechanical strength and toughness of the existing polyethylene sheath, so as to meet the requirements for the mechanical performance of the sheath in the high-voltage cable. At the same time, since the flame retardant performance of polyvinyl chloride are far superior to that of polyethylene, the flame retardant rating of the high-voltage cable can be improved by the modified polyvinyl chloride sheath, making the high-voltage cable easy to pass the Bundled Burning Test-Category A of the high-voltage cable, so as to meet the requirements for the improving the flame retardant performance of the high-voltage cable.

### BRIEF DESCRIPTION OF DRAWINGS

In order to more clearly illustrate the technical solutions in the embodiments of the present invention or in the prior art, a brief introduction of the drawings required for use in the description of the embodiments or the prior art is provided below. Obviously, the drawings in the following description are some embodiments of the present invention. For those of ordinary skill in the art, other drawings can also be obtained based on these drawings without paying creative efforts.
FIG. 1 is a first structural schematic diagram of a high-voltage cable during its preparation process according to an embodiment of the present invention.
FIG. 2 is a second structural schematic diagram of a high-voltage cable during its preparation process according to an embodiment of the present invention.
FIG. 3 is a third structural schematic diagram of a high-voltage cable during its preparation process according to an embodiment of the present invention.

### Description of reference signs:

100 - high-voltage cable; 1 - conductor; 2 - semi-conductive blocking tape; 3 - conductor shielding layer; 4 - insulating layer; 5 - insulation shielding layer; 6 - semi-conductive elastomer buffer layer; 7 - smooth metal sheath layer; 8 - hot melt adhesive layer; 9 - modified polyvinyl chloride sheath; 10 - conductive layer.

### DESCRIPTION OF EMBODIMENTS

The terms used in the embodiments of the present invention are only used for explaining the specific embodiments of the present invention and are not intended to limit the present invention.

High-voltage cable is a type of power cable, which refers to a cable used for transmitting power between 66kV and 750kV, and is mainly applied in power transmission and distribution.

Generally, a cushion layer and a metal sheath layer are usually wrapped in sequence around an outer surface of an insulation shielding layer of a cable core in a high-voltage cable, where the insulation shielding layer is an outermost layer of the cable core. Most existing high-voltage cables adopt a corrugated aluminum sheath as the metal sheath layer, which is wrapped around the outer surface of the cushion layer. Such a high-voltage cable may be referred to as a corrugated aluminum sheath cable. As described in the background, from the dissection of fault cases of corrugated aluminum sheath cables over the past decade, it has been found that a large number of burn marks or discharge traces appear on the surface of the insulation shielding layer, and even breakdown phenomena occurs, which has attracted great attention from major power companies.

Extensive tests conducted by scientific research institutes and testing institutions have identified two main reasons for the aforementioned phenomenon:
1. quality issues of the cushion layer;
2. structural defects of the corrugated aluminum sheath.

The surface of the corrugated aluminum sheath is mostly a spiral structure, which results in linear contact between the corrugated aluminum sheath and the buffer tape. This prevents continuous electrical contact between the two. When the corrugated aluminum sheath process is not appropriate, a gap will form between the corrugated aluminum sheath and the buffer tape, causing gap discharge during the partial discharge and withstand voltage test of the finished product of the corrugated aluminum sheath cable.

In order to overcome the structural defects of corrugated aluminum sheath, the cable industry has begun to develop smooth aluminum sheath cables, which adopt smooth aluminum sheaths. It is expected that the phenomenon of gap discharge during finished product testing can be overcome by increasing the contact area between the smooth aluminum sheath and the buffer tape by the surface contact of them. At present, such smooth aluminum sheath cables have been applied in small batches and are operating well.

However, a sheath is further wrapped around the outer surface of the smooth aluminum sheath in the smooth aluminum sheath cable. Due to the good hardness and mechanical strength of polyethylene (PE), currently only PE-type sheath materials can satisfy the production of smooth aluminum sheath. Therefore, most existing smooth aluminum sheaths are polyethylene sheaths (hereinafter referred to as PE sheaths).

As the State Grid Corporation of China increasingly emphasizes to the flame retardant performance of high-voltage cables, the high-voltage cables currently laid in tunnels require a flame retardant rating of Class B or more, which increases the difficulty in preparation of smooth aluminum sheath cables with high flame retardant performance. Thus, the existing smooth aluminum sheath cables have relatively low flame retardant ratings, which are difficult to satisfy the improvement of the flame retardant performance of high-voltage cables, and cannot pass the Bundled Burning Test-Category A for finished products of high-voltage cables.

It should be noted that the flame retardant ratings of cables are generally classified into Class A, Class B and Class C, where the flame retardant ratings decrease sequentially from Class A to Class B and then to Class C. The Bundled Burning Test-Category A is a conventional test in the prior art for testing the flame retardant performance of cables. The specific test content may be referred to the relevant description in the prior art, which is not further defined in this embodiment.

In view of this, the present invention provides a preparation method of a high-voltage cable, and a high-voltage cable, which can meet the requirements for improving the flame retardant performance of the high-voltage cable.

The preparation method of the high-voltage cable and the structure of the high-voltage cable of the present invention are further described below in conjunction with the drawings and embodiments.

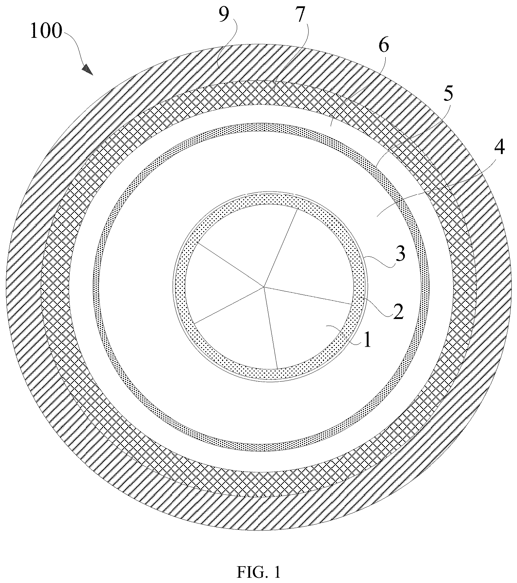

Referring to FIG. 1, a preparation method of a high-voltage cable is provided by an embodiment of the present invention, and the preparation method includes:
preparing modified polyvinyl chloride, where the modified polyvinyl chloride includes polyvinyl chloride and a filler added to the polyvinyl chloride, and with 100 parts by weight of polyvinyl chloride as a base material, the filler includes the following ingredients in parts by weight: 1-2 parts of polyethylene, 2-3 parts of filling agent, 2-3 parts of lubricant, and 2-5 parts of toughening agent;
extruding and wrapping the modified polyvinyl chloride around an outer surface of a smooth metal sheath layer 7 to form a modified polyvinyl chloride sheath 9, with the modified polyvinyl chloride sheath 9 being bonded to the smooth metal sheath layer 7; where the smooth metal sheath layer 7 is wrapped around an outer surface of a cable core.

Exemplarily, the smooth metal sheath layer 7 may include, but is not limited to, a smooth aluminum sheath layer. It should be noted that, compared with the existing corrugated aluminum sheath, the smooth aluminum sheath layer mainly refers to an aluminum sheath layer with a smooth surface.

Since the polyvinyl chloride (PVC)-based materials are relatively soft and have a relatively low hardness, the mechanical strength and hardness of PVC-based materials are lower than those of PE-based materials, so that PVC-based materials cannot currently be used as sheaths in smooth aluminum sheath cables.

Therefore, in the preparation method of the present invention, PVC is modified by preparing modified polyvinyl chloride. The mechanical strength and hardness of PVC can be improved by an addition of PE in the filler, and the toughness of PVC can be improved by an addition of a toughening agent. In this way, the mechanical performance of PVC can be improved by addition of the filler, so that the mechanical performance index of the modified polyvinyl chloride is closer to that of polyethylene used for preparing the smooth aluminum sheath in the existing smooth aluminum sheath cable. Thus, when the prepared modified polyvinyl chloride is extruded and wrapped around the outer surface of the smooth metal sheath layer 7 to form the modified polyvinyl chloride sheath 9, the mechanical performance of the formed modified polyvinyl chloride sheath 9, such as mechanical strength and toughness, can both reach the mechanical strength and toughness of the existing PE sheath. Accordingly, when the modified polyvinyl chloride sheath 9 is applied to the high-voltage cable 100, the requirements for the mechanical performance of the sheath in the high-voltage cable 100 can be satisfied.

At the same time, since the flame retardant performance of PVC is far superior to that of PE, in the present embodiment, the flame retardant rating of the high-voltage cable 100 can also be improved by modifying PVC and forming the prepared modified polyvinyl chloride into the modified polyvinyl chloride sheath 9, so that the high-voltage cable 100 of the present invention can easily pass the Bundled Burning Test-Category A of the high-voltage cable 100 to meet the requirements for improved flame retardant performance of the high-voltage cable 100. The high-voltage cable 100 of the present invention has a flame retardant rating reaching Class B or more, and can be applied to places requiring higher flame retardant ratings, such as tunnels and cable trenches, thereby avoiding the occurrence of fire and improving the safe operation of the power grid.

It should be noted that in the preparation of modified polyvinyl chloride in the present embodiment, soft PVC may be used as the base material, and the modified polyvinyl chloride may be prepared and obtained by adding a filler.

Where, preparing modified polyvinyl chloride specifically includes:
using 100 parts by weight of polyvinyl chloride as a base material, a filler is added, with a mass ratio of polyethylene, filling agent, lubricant and toughening agent in the filler being 1:2:2:4.

It should be noted that the above mass ratio can be understood as a parts-by-mass ratio of polyethylene, filling agent, lubricant and toughening agent. That is to say, the parts-by-mass ratio of polyethylene, filling agent, lubricant and toughening agent in the filler is 1:2:2:4. According to the test results of experiment, when the mass ratio of polyethylene, filling agent, lubricant and toughening agent is 1:2:2:4, the prepared modified polyvinyl chloride has a tensile strength of 23Mpa and a Shore hardness of 57D, which are close to the mechanical performance indexes of PE. It can be seen that in the present invention, by modifying PVC to prepare modified polyvinyl chloride, the mechanical performance of PVC is improved, and the bending stress of PVC is increased from 3N to 21N, reaching the bending stress level of PE.

In some embodiments, the mass ratio of polyethylene, filling agent, lubricant and toughening agent in the filler may also be 1:2:3:3, 2:3:2:2 or other ratios. According to the test results of experiment, when the mass ratio of polyethylene, filling agent, lubricant and toughening agent is 2:3:2:2, the prepared modified polyvinyl chloride has a tensile strength of 18Mpa and a Shore hardness of 50D, which are also basically close to the mechanical performance indexes of PE. It can be seen that when the mass ratio of polyethylene, filling agent, lubricant and toughening agent in the filler is 1:2:3:3 or 2:3:2:2, the PVC is modified in the present invention, and the prepared modified polyvinyl chloride also improves the mechanical performance of PVC, with the bending stress of PVC being increased from 3N to 18N. It can be seen that the mass ratio of polyethylene, filling agent, lubricant and toughening agent in the filler in the present invention may include, but is not limited to, 1:2:2:4.

Exemplarily, the filling agent may include, but is not limited to, nano-calcium carbonate or other nano-scale filling materials; and the material of the filling agent is not further limited in the present application. Where, the lubricant may include, but is not limited to, ethylene bis stearamide (EBS); and in some embodiments, the lubricant may also include paraffin wax, PE wax, etc. The toughening agent may include, but is not limited to, acrylonitrile-butadienestyrene (ABS) copolymer or other thermoplastic polymer structural materials; and the material of the toughening agent is not further limited in the present application. Acrylonitrile-butadienestyrene copolymer is a thermoplastic polymer structural material with high strength, good toughness, and easiness for processing and molding, and also known as ABS resin, which has the characteristics of high strength and good toughness.

It should be noted that, in the preparation process of modified polyvinyl chloride, the modified polyvinyl chloride can be formed by adding the above-mentioned filler into the soft PVC base material and mixing them uniformly, thereby completing the preparation of the modified polyvinyl chloride. In the modified polyvinyl chloride, the above-mentioned filler and the PVC base material exist in a blended form.

Specifically, the modified polyvinyl chloride is extruded and wrapped around the outer surface of the smooth metal sheath layer 7 to form the modified polyvinyl chloride sheath 9, which specifically includes:
extruding and wrapping the modified polyvinyl chloride around the outer surface of the smooth metal sheath layer 7 by an extruder to form the modified polyvinyl chloride sheath 9;
during the extrusion process, by adjusting the barrel heating temperature and the head heating temperature of the extruder, the extruder is controlled to reach the melting temperature of the modified polyvinyl chloride when extruding the modified polyvinyl chloride, so that the modified polyvinyl chloride can be in a molten state when extruded by the extruder.

In some embodiments, the melting temperature of the modified polyvinyl chloride is greater than or equal to 175°C, and less than or equal to 185°C. At this time, the barrel heating temperature of the extruder is greater than or equal to 160°C, and less than or equal to 180°C; and the head heating temperature of the extruder is greater than or equal to 180°C or equal to 200°C.

It should be noted that the barrel heating temperature may be divided into several melting ranges. For example, the barrel heating temperature may be divided into three melting ranges: a feeding section temperature, a melting section temperature and a homogenizing section temperature. Among them, the feeding section temperature may be greater than or equal to 160°C or equal to 170°C, the melting section temperature may be greater than or equal to 170°C or equal to 175°C, and the homogenizing section temperature may be greater than or equal to 175°C or equal to 180°C.

When the barrel heating temperature of the extruder is greater than or equal to 160°C and less than or equal to 180°C, the modified polyvinyl chloride can be melted, so that the extrusion screw in the extruder pushes the modified polyvinyl chloride from the barrel position of the extruder into the head position of the extruder, thereby extruding and wrapping the modified polyvinyl chloride around the outer surface of the smooth metal sheath layer 7 (such as a smooth aluminum sheath) through the head to form the modified polyvinyl chloride sheath 9. In this way, by controlling the barrel heating temperature and the head heating temperature of the extruder, the temperature of the extruder during extrusion of the modified polyvinyl chloride can be controlled, allowing the modified polyvinyl chloride to be in a molten state during its extrusion by the extruder, so that the modified polyvinyl chloride is extruded and wrapped around the outer surface of the smooth metal sheath layer 7 with a uniform thickness by the extruder to form a polyvinyl chloride sheath.

Since the smooth aluminum sheath cable has slightly inferior bending performance compared to the corrugated aluminum sheath cable, the smooth aluminum sheath cable of the related art adopts hot melt adhesive to bond the PE sheath and the smooth aluminum sheath together to improve its bending performance, followed by direct winding. Although bonding the PE sheath to the smooth aluminum sheath via hot melt adhesive improves the bending performance of the smooth aluminum sheath cable, the bending performance of the ultra-high voltage large-cross-section smooth aluminum sheath cable with a finished outer diameter above 150mm remains unsatisfactory, and the smooth aluminum sheath is prone to wrinkling during production.

In addition, the existing hot melt adhesive base material is usually ethylene-vinyl acetate copolymer, which may also be referred to as EVA (Ethylene Vinyl Acetate Copolymer) plastic. The EVA plastic is easy to bond aluminum and PE sheath. Due to the different formulation systems, the modified polyvinyl chloride sheath 9 cannot be bonded to aluminum.

High-voltage cables 100 with an outer diameter of 150 mm or more are generally wound by a take-up reel. Since both the mechanical strength and toughness of the modified polyvinyl chloride sheath 9 reach the level of the PE sheath, the smooth metal sheath layer 7 will not wrinkle after the high-voltage cable 100 is wound when the barrel diameter of the take-up reel is 22 times the outer diameter of the high-voltage cable 100. When the above barrel diameter is reduced to 21 times or less the outer diameter of the high-voltage cable 100, the smooth metal sheath layer 7 will still wrinkle after bending.

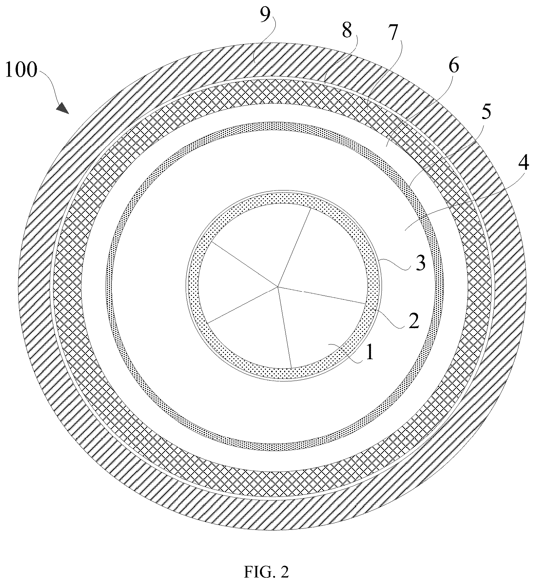

To this end, referring to FIG. 2, before extruding and wrapping the modified polyvinyl chloride around the outer surface of the smooth metal sheath layer 7 to form the modified polyvinyl chloride sheath 9, the preparation method further includes:
preparing polyester hot melt adhesive;
extruding and wrapping the polyester hot melt adhesive around the outer surface of the smooth metal sheath layer 7 to form a hot melt adhesive layer 8, where the modified polyvinyl chloride sheath 9 is bonded to the smooth metal sheath layer 7 via the hot melt adhesive layer 8.

It should be noted that, in the present application, the polyester hot melt adhesive is extruded and wrapped around the outer surface of the smooth metal sheath layer 7 to form a hot melt adhesive layer 8. In this way, the modified polyvinyl chloride sheath 9 and the smooth metal sheath layer 7, such as a smooth aluminum sheath, can be tightly bonded as a whole via the hot melt adhesive layer 8, thereby achieving the modified polyvinyl chloride sheath 9 being wrapped around the outer surface of the smooth metal sheath layer 7, and at the same time improving the overall bending performance of the high-voltage cable 100 of the present invention.

Through the setting of the modified polyvinyl chloride sheath 9 and the hot melt adhesive layer 8, it has been verified that when the above-mentioned barrel diameter is reduced to 17 to 14 times the outer diameter of the high-voltage cable 100, the smooth metal sheath layer 7 does not wrinkle after the high-voltage cable 100 of the present invention is wound. When the above-mentioned barrel diameter is reduced to 13 times or less the outer diameter of the high-voltage cable 100, the smooth metal sheath layer 7 wrinkles after bending.

It can be seen that compared with the existing smooth aluminum sheath cable, the present invention, through the setting of the modified polyvinyl chloride sheath 9 and the hot melt adhesive layer 8, can greatly improve the bending performance of the high-voltage cable 100, especially for the finished high-voltage cable 100 with an outer diameter of 150mm or more, enabling the bending performance of the finished high-voltage cable 100 with the outer diameter of 150mm or more to reach a relatively ideal state. The surface of the smooth metal sheath layer 7 is not prone to wrinkling during production, allowing PVC to be used as a sheath material for the production of the high-voltage cable 100, and to be wrapped around the outer surface of the smooth aluminum sheath layer via the hot melt adhesive layer 8, thereby realizing the production and application of the high-voltage cable 100 of the present invention. Since the flame retardant performance of the modified polyvinyl chloride sheath 9 is better than that of the PE sheath, the flame retardant performance of the high-voltage cable 100 of the present invention is greatly improved.

Where, extruding and wrapping the polyester hot melt adhesive around the outer surface of the smooth metal sheath layer to form a hot melt adhesive layer 8 specifically includes:
extruding and wrapping the polyester hot melt adhesive around the outer surface of the smooth metal sheath layer by an extruder to form a hot melt adhesive layer 8.

During the extrusion process, the barrel heating temperature of the extruder is greater than or equal to 170°C and less than or equal to 190°C; and the head heating temperature of the extruder is greater than or equal to 190°C or equal to 220°C, so as to control the extruder to reach the melting temperature of the polyester hot melt adhesive when extruding the polyester hot melt adhesive by adjusting the barrel heating temperature and the head heating temperature of the extruder. The melting temperature of the polyester hot melt adhesive is greater than or equal to 190°C or equal to 210°C.

It should be noted that, similar to the extrusion process of the modified polyvinyl chloride by the extruder, during the process of the extruder extruding the polyester hot melt adhesive, the barrel heating temperature may also include three melting ranges: the feeding section temperature, the melting section temperature and the homogenizing section temperature. Among them, the feeding section temperature may be greater than or equal to 170°C or equal to 175°C, the melting section temperature may be greater than or equal to 175°C or equal to 185°C, and the homogenizing section temperature may be greater than or equal to 185°C or equal to 190°C.

By controlling the temperature of the feeding section temperature, the melting section temperature and the homogenizing section temperature, the polyester hot melt adhesive can be melted when the barrel heating temperature of the extruder is greater than or equal to 170°C and less than or equal to 190°C, so that the extrusion screw in the extruder pushes the polyester hot melt adhesive from the barrel position into the head position of the extruder, thereby extruding and wrapping the polyester hot melt adhesive around the outer surface of the smooth metal sheath layer 7 (such as a smooth aluminum sheath) via the head of the extruder to form the hot melt adhesive layer 8. In this way, by controlling the barrel heating temperature and the head heating temperature of the extruder, the polyester hot melt adhesive can reach its own melting temperature when being extruded at the head position, and the polyester hot melt adhesive can be extruded and wrapped around the outer surface of the smooth metal sheath layer 7 with a uniform thickness via the head of the extruder to form the hot melt adhesive layer 8.

Where, preparing polyester hot melt adhesive specifically includes:
subjecting thermoplastic polyester to alcoholysis treatment, acetification treatment, heating treatment and cooling treatment in sequence to form the polyester hot melt adhesive.

In this way, the thermoplastic polyester is subjected to alcoholysis treatment and acetification treatment in sequence, and then the acetified material continues to heat up during the heating treatment. As some substances in the material are distilled off and the copolycondensation reaction proceeds, the polyester hot melt adhesive is formed after the cooling treatment.

Exemplarily, the thermoplastic polyester may include, but is not limited to, polyethylene terephthalate (PET), which may also be referred to as polyester resin. In some embodiments, the thermoplastic polyester may also adopt other thermoplastic polyesters, such as polyethersulfone (PES). In this embodiment, the type of thermoplastic polyester is not further limited.

Where, the alcoholysis treatment refers to an alcoholysis performed by adding an alcoholysis solution into the thermoplastic polyester;
the alcoholysis solution includes the following ingredients in parts by weight: 20 parts of an alcohol solution and 2-3 parts of a first catalyst, based on 100 parts by weight of the thermoplastic polyester.

It should be noted that the alcohol solution includes, but is not limited to, ethylene glycol. The first catalyst includes, but is not limited to, a catalyst commonly used for thermoplastic polyesters, which is well known to those skilled in the art and is not further limited herein. In this way, the thermoplastic polyester (such as PET) can be subjected to alcoholysis by the alcohol solution, so as to form the polyester hot melt adhesive through subsequent processes. Under the catalytic action of the first catalyst, the alcoholysis process of the thermoplastic polyester, such as PET, by the alcohol solution can be accelerated to shorten the time of alcoholysis treatment.

The acetification treatment refers to adding an acidolysis solution to the material that has completed the alcoholysis treatment, and heating until all the material in the process of the acetification treatment is completely dissolved;
based on 100 parts by weight of the thermoplastic polyester, the acidolysis solution includes the following ingredients in parts by weight: 80 parts by weight of an acid solution, 4-6 parts by weight of a second catalyst, and 2-4 parts by weight of a first antioxidant.

It should be noted that the acid solution includes, but is not limited to, oxalic acid, and the second catalyst may be a catalyst commonly used for thermoplastic polyester, which is well known to those skilled in the art and is not further limited herein. The first antioxidant includes, but is not limited to, the antioxidant 1010 in the prior art. In this way, the material that has completed the alcoholysis treatment can be subjected to acidolysis by the acid solution, so as to form the polyester hot melt adhesive via subsequent processes such as heating treatment and cooling treatment. Under the catalytic action of the second catalyst, the acidolysis process of the material after completion of the alcoholysis treatment by the acid solution can be accelerated to shorten the time of the acidolysis treatment. By adding the first antioxidant to the acidolysis solution, the oxidation of the material that has completed the alcoholysis treatment can be prevented during the acidolysis process, thereby avoiding effects on the formation of the polyester hot melt adhesive.

It should be noted that the heating treatment mainly refers to continuously heating the material that has completed the acetification treatment to 220°C-240°C. As some low molecular weight substances in the material, such as ethylene glycol, are distilled off, and the copolycondensation reaction of the thermoplastic polyester proceeds, the polyester hot melt adhesive will be formed after the cooling treatment.

In the embodiments of the present invention, the heating treatment and the cooling treatment are not specifically limited, and the heating treatment and cooling treatment commonly used in the art can be employed to heat and cool the thermoplastic polyester. In the related art, the smooth aluminum sheath cable adopts a tape, such as a buffer water-blocking tape, as a cushion layer, for being wrapped around the outer surface of the insulation shielding layer of the cable core of the smooth aluminum sheath cable, so that the cushion layer is located between the cable core and the smooth aluminum sheath, providing buffer protection and longitudinal water-blocking effect for the cable core. However, the design of the cushion layer in the existing smooth aluminum sheath cable has the following problems:
1. the cushion layer is designed to be excessively thick, resulting in an overlarge gap between the smooth aluminum sheath and the insulation shielding layer 5 in the existing smooth aluminum sheath cable, which is not conducive to tightening the smooth aluminum sheath and the cable core;
2. the buffer water-blocking tape contains water-blocking powder, which will undergo a chemical reaction with the smooth aluminum sheath after absorbing moisture, causing discharge and ablation of the insulation shielding layer and the cushion layer, thereby reducing the product performance of the smooth aluminum sheath cable.

To this end, in some embodiments, referring to FIG. 2, before extruding and wrapping the modified polyvinyl chloride around the outer surface of the smooth metal sheath 7 to form the modified polyvinyl chloride sheath 9, the preparation method further includes:
preparing an elastic buffer material having semi-conductive properties;
extruding and wrapping the elastic buffer material around the outer surface of the insulation shielding layer 5 of the cable core to form a semi-conductive elastomer buffer layer 6, so that the smooth metal sheath layer 7 is in contact with the insulation shielding layer 5 via the semi-conductive elastomer buffer layer 6.

It should be noted that the extruding and wrapping of semi-conductive elastomer buffer layer 6 around the outer surface of the insulation shielding layer 5 is performed prior to the extruding and wrapping of smooth metal sheath layer 7 around the outer surface of the insulation shielding layer 5. In the embodiments of the present invention, the prepared elastic buffer material with semi-conductive properties is extruded and wrapped around the outer surface of the insulation shielding layer 5 of the cable core to form the semi-conductive elastomer buffer layer 6. Since the semi-conductive elastomer buffer layer 6 has a certain elasticity, during the production process of the high-voltage cable 100, after the smooth metal sheath layer 7 passes through a diameter reduction device, the inner diameter of the smooth metal sheath layer 7 is connected with the semi-conductive elastomer buffer layer 6 in a negative clearance fit. The semi-conductive elastomer buffer layer 6 can effectively fill the gap between the smooth metal sheath layer 7 and the insulation shielding layer 5. While achieving longitudinal water blocking, it can also make the smooth metal sheath layer 7 tightened to the outer surface of the insulation shielding layer 5, ensuring that the smooth metal sheath layer 7 is in close contact with the insulation shielding layer 5, and ensuring continuous and frequent electrical contact between the smooth metal sheath layer 7 and the insulation shielding layer 5.

In addition, since the semi-conductive elastomer buffer layer 6 is formed by extruding and wrapping the elastic buffer material around the outer surface of the insulation shielding layer 5 of the cable core instead of using a buffer water-blocking tape, the provision of the semi-conductive elastomer buffer layer 6 in the embodiment of the present invention can also avoid the chemical reaction between the water-blocking powder and the smooth metal sheath layer 7, thereby ensuring the product performance of the high-voltage cable 100 of the embodiments of the present invention and improving the safe and reliable operation of the high-voltage cable 100 during use in the power grid system.

Extensive tests have verified that after the high-voltage cable 100 adopts the semi-conductive elastomer buffer layer 6, since the semi-conductive elastomer buffer layer 6 does not contain water-blocking powder, the problem of electrochemical reaction between the smooth metal sheath layer 7 and the water-blocking powder is solved, and the corrosion of the semi-conductive elastomer buffer layer 6 and the insulation shielding layer 5 is prevented, thereby improving the service life of the high-voltage cable 100.

In the present embodiment, the elastic buffer material may be extruded and wrapped around the outer surface of the insulation shielding layer 5 by an extrusion equipment, such as an extruder, to form the semi-conductive elastomer buffer layer 6. Where, when the rated voltage of the high-voltage cable 100 is 66kV to 110kV, the thickness of the semi-conductive elastomer buffer layer 6 may be greater than or equal to 2.5mm and less than or equal to 3.5mm. When the rated voltage of the high-voltage cable 100 is 220kV, the thickness of the semi-conductive elastomer buffer layer 6 may be greater than or equal to 4.5mm and less than or equal to 6mm. When the rated voltage of the high-voltage cable 100 is 500kV, the thickness of the semi-conductive elastomer buffer layer 6 may be greater than or equal to 5mm and less than or equal to 7.5mm.

Specifically, preparing an elastic buffer material having semi-conductive properties specifically includes:
mixing the following raw materials in parts by weight to prepare the elastic buffer material: 100 parts of elastomer rubber, 20 parts of rubber-plastic foaming material, 35-40 parts of styrene-butadiene rubber, 25-30 parts of filling and reinforcing agent, and 2-5 parts of a second antioxidant.

It should be noted that styrene-butadiene rubber may also be referred to as polymerized styrene butadiene rubber (SBR). The elastomer rubber, rubber-plastic foaming material, styrene-butadiene rubber, filling and reinforcing agent, and second antioxidant may be mixed (physically blended) and melted in an extrusion equipment, such as an extruder, and then extruded and wrapped around the outer surface of the insulation shielding layer 5 to form a semi-conductive elastomer buffer layer 6. Due to the provision of the elastomer rubber, rubber-plastic foaming material and styrene-butadiene rubber, the semi-conductive elastomer buffer layer 6 can possess a certain elasticity, so that the semi-conductive elastomer buffer layer 6 can effectively fill the gap between the smooth aluminum sheath layer and the insulation shielding layer 5. At the same time, by adding the filling and reinforcing agent, the strength of the elastic buffer material and the semi-conductive elastomer buffer layer 6 can be enhanced, and the addition of the second antioxidant can ensure that the elastic buffer material and the semi-conductive elastomer buffer layer 6 have a certain antioxidant property.

Exemplarily, the elastomer rubber may include, but is not limited to, a rubber formed by a copolymer of ethylene, propylene and non-conjugated diene, which may also be referred to as an elastomer EPMD. The rubber-plastic foaming material may include, but is not limited to, a plastic formed by copolymerization of ethylene and acetic acid, which may also be referred to as an EVA plastic. The filling and reinforcing agent may include, but is not limited to, carbon black. The second antioxidant may include, but is not limited to, antioxidant 168 in the prior art.

In order to verify the performance of the elastic buffer material, the elastic buffer material is prepared by mixing the following raw materials in parts by weight as an example: 100 parts of elastomer EPMD, 20 parts of EVA plastic, 40 parts of styrene-butadiene rubber, 30 parts of carbon black, and 5 parts of the second antioxidant. The volume resistivity of the prepared elastic buffer material can reach 10Ω·m, which can meet the performance requirements of the semi-conductive elastomer buffer layer 6 in the high-voltage cable 100.

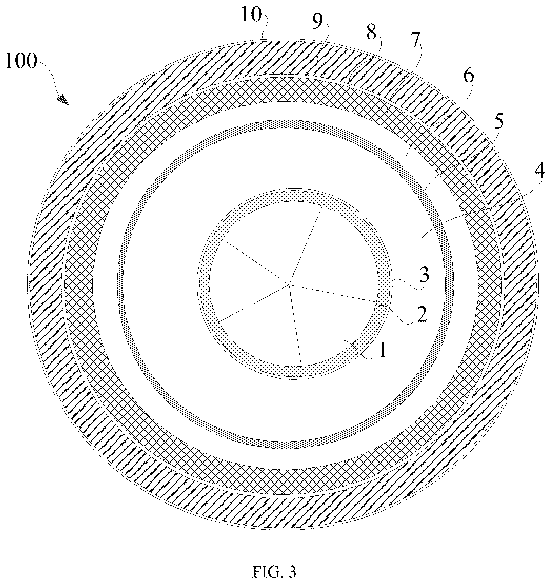

Referring to FIG. 3, after the modified polyvinyl chloride sheath 9 is extruded and wrapped around the outer surface of the smooth aluminum sheath, the preparation method of the high-voltage cable of the present invention further includes:
forming a conductive layer 10 on the outer surface of the modified polyvinyl chloride sheath 9.

It should be noted that the conductive layer 10 may include, but is not limited to, a semi-conductive graphite layer. The formation method of the conductive layer 10 may refer to the relevant description of the high-voltage cable 100 in the prior art. In this embodiment, the formation method of the conductive layer 10 is not further described.

Referring to FIG. 3, the cable core may include a conductor 1; and the outer surface of the conductor 1 is sequentially wrapped with a semi-conductive blocking tape 2, a conductor shielding layer 3, an insulating layer 4 and an insulation shielding layer 5. The conductor 1, together with the semi-conductive blocking tape 2, the conductor shielding layer 3, the insulating layer 4 and the insulation shielding layer 5, constitutes the cable core, and the insulation shielding layer 5 serves as the outermost layer of the cable core. Exemplarily, the insulating layer 4 may include, but is not limited to, an insulating layer formed by cross-linked polyethylene (XLPE).

In this embodiment, before extruding and wrapping the elastic buffer material around the outer surface of the insulation shielding layer 5, the preparation method of the high-voltage cable of the present invention may further include:
preparing a cable core.

It should be noted that the preparation method of the cable core, as well as the material and the structure of each layer in the cable core may refer to the relevant description of the high-voltage cable in the prior art. In this embodiment, the preparation method of the cable core is not further described. The structure of the high-voltage cable 100 prepared by the preparation method of the high-voltage cable provided by the embodiments of the present invention is shown in FIG. 3.

The preparation method of the high-voltage cable of the present invention is further described below in conjunction with specific examples.

### Example 1

Referring to FIG. 3, a preparation method of a high-voltage cable provided by the present example may include the following steps.

### 1) Preparing a cable core

### 2) Forming a semi-conductive elastomer buffer layer 6 on an outer surface of the cable core

The following raw materials in parts by weight: 100 parts of elastomer EPMD, 20 parts of EVA plastic, 40 parts of styrene-butadiene rubber, 30 parts of carbon black and 5 parts of a second antioxidant (antioxidant 168) are mixed to prepare an elastic buffer material.

The elastic buffer material is extruded and wrapped around an outer surface of an insulation shielding layer 5 of the cable core by an extrusion equipment to form a semi-conductive elastomer buffer layer 6; and the semi-conductive elastomer buffer layer 6 is wrapped around the outer surface of the insulation shielding layer 5 and is in close contact with the insulation shielding layer 5.

Where, the elastic buffer material may have a volume resistivity reaching 10Ω·m.

### 3) Forming a smooth metal sheath layer 7 on an outer surface of the semi-conductive elastomer buffer layer 6

The smooth metal sheath layer 7 may be a smooth aluminum sheath layer, and the formation method of the smooth aluminum sheath layer may refer to the related description of the high-voltage cable 100 in the prior art. The cable core wrapped with the smooth metal sheath layer 7 is passed through a diameter reduction device, so that the smooth metal sheath layer 7 and the semi-conductive elastomer buffer layer 6 are in a negative clearance fit, and the gap between the aluminum sheath and the cable core is filled by the semi-conductive elastomer buffer layer 6.

### 4) Forming a hot melt adhesive layer 8 on an outer surface of the smooth metal sheath layer 7

Alcoholysis treatment: performing alcoholysis by adding an alcoholysis solution to PET, where the alcoholysis solution includes the following ingredients in parts by weight based on 100 parts by weight of PET: 20 parts of ethylene glycol and 3 parts of a first catalyst.

Acetification treatment: adding an acidolysis solution to the material that has completed the alcoholysis treatment, and heating until the material in the process of the acetification treatment is completely dissolved; where the acidolysis solution includes the following ingredients in parts by weight based on 100 parts by weight of PET: 80 parts of oxalic acid, 6 parts of the second catalyst and 4 parts of the first antioxidant.

The material after completion of acetification continues to heat up to 220°C-240°C during the heating treatment. As some substances in the material are distilled off and the copolycondensation reaction proceeds, a polyester hot melt adhesive is formed after the cooling treatment.

The polyester hot melt adhesive is extruded and wrapped around the outer surface of the smooth metal sheath layer 7 by an extruder to form a hot melt adhesive layer 8, where the modified polyvinyl chloride sheath 9 is bonded to the smooth metal sheath layer 7 via the hot melt adhesive layer 8. Where, the barrel heating temperature of the extruder is 190°C, and the head heating temperature of the extruder is 220°C.

### 5) Forming a modified polyvinyl chloride sheath 9 on an outer surface of the hot melt adhesive layer 8

Using 100 parts by weight of polyvinyl chloride as a base material, a filler is added to prepare a modified polyvinyl chloride, and the filler includes the following ingredients in parts by weight: 1 part of polyethylene, 2 parts of filling agent, 3 parts of lubricant and 3 parts of ABS resin.

The modified polyvinyl chloride is extruded and wrapped around the outer surface of the smooth metal sheath layer 7 by an extruder to form a modified polyvinyl chloride sheath 9, and the modified polyvinyl chloride sheath 9 is bonded to the smooth metal sheath layer 7. Where, the barrel heating temperature of the extruder is 180°C, and the head heating temperature of the extruder head is 200°C.

Where, the modified polyvinyl chloride sheath 9 has a tensile strength of 22MPa, a hardness of 55D, and a bending stress of PVC being increased from 3N to 19N.

### 6) Forming a conductive layer 10 on an outer surface of the modified polyvinyl chloride sheath 9

It should be noted that the high-voltage cable 100 can be formed once the conductive layer 10 is formed.

### Example 2

Referring to FIG. 3, a preparation method of a high-voltage cable provided by the present example may include the following steps.

### 1) Preparing a cable core

### 2) Forming a semi-conductive elastomer buffer layer 6 on an outer surface of the cable core

The following raw materials in parts by weight: 100 parts of elastomer EPMD, 20 parts of EVA plastic, 40 parts of styrene-butadiene rubber, 30 parts of carbon black and 5 parts of a second antioxidant (antioxidant 168) are mixed to prepare an elastic buffer material.

The elastic buffer material is extruded and wrapped around an outer surface of an insulation shielding layer 5 of the cable core by an extrusion equipment to form a semi-conductive elastomer buffer layer 6. A smooth metal sheath layer 7 is in close contact with the insulation shielding layer 5 via the semi-conductive elastomer buffer layer 6.

Where, the elastic buffer material may have a volume resistivity reaching 10Ω·m.

### 3) Forming a smooth metal sheath layer 7 on an outer surface of the semi-conductive elastomer buffer layer 6

The smooth metal sheath layer 7 may be a smooth aluminum sheath, and the formation method of the smooth aluminum sheath may refer to the related description of the high-voltage cable 100 in the prior art. The cable core wrapped with the smooth metal sheath layer 7 is passed through a diameter reduction device, so that the smooth metal sheath layer 7 and the semi-conductive elastomer buffer layer 6 are in a negative clearance fit, and the gap between the aluminum sheath and the cable core is filled by the elastomer.

### 4) Forming a hot melt adhesive layer 8 on an outer surface of the smooth metal sheath layer 7

Alcoholysis treatment: performing alcoholysis by adding an alcoholysis solution to PET, where the alcoholysis solution includes the following ingredients in parts by weight based on 100 parts by weight of PET: 20 parts of ethylene glycol and 2 parts of a first catalyst.

Acetification treatment: adding an acidolysis solution to the material that has completed the alcoholysis treatment, and heating until the material in the process of acetification treatment is completely dissolved; where the acidolysis solution includes the following ingredients in parts by weight based on 100 parts by weight of PET: 80 parts of oxalic acid, 4 parts of the second catalyst and 2 parts of the first antioxidant.

The material after completion of acetification continues to heat up to 220°C-240°C during the heating treatment. As some substances in the material are distilled off and the copolycondensation reaction proceeds, a polyester hot melt adhesive is formed after the cooling treatment.

The polyester hot melt adhesive is extruded and wrapped around the outer surface of the smooth metal sheath layer 7 by an extruder to form a hot melt adhesive layer 8, where the modified polyvinyl chloride sheath 9 is bonded to the smooth metal sheath layer 7 via the hot melt adhesive layer 8. Where, the barrel heating temperature of the extruder is 170°C, and the head heating temperature of the extruder is 190°C.

### 5) Forming a modified polyvinyl chloride sheath 9 on an outer surface of the hot melt adhesive layer 8

Using 100 parts by weight of polyvinyl chloride as a base material, a filler is added to prepare a modified polyvinyl chloride; and the filler includes the following ingredients in parts by weight: 2 part of polyethylene, 3 parts of filling agent, 2 parts of lubricant and 2 parts of ABS resin.

The modified polyvinyl chloride is extruded and wrapped around the outer surface of the smooth metal sheath layer 7 by an extruder to form a modified polyvinyl chloride sheath 9, and the modified polyvinyl chloride sheath 9 is bonded to the smooth metal sheath layer 7. Where, the barrel heating temperature of the extruder is 160°C, and the head heating temperature of the extruder head is 180°C.

Where, the modified polyvinyl chloride sheath 9 has a tensile strength of 21MPa, a hardness of 56, and a bending stress of PVC being increased from 3N to 18N.

### 6) Forming a conductive layer 10 on an outer surface of the modified polyvinyl chloride sheath 9

It should be noted that the high-voltage cable 100 can be formed once the conductive layer 10 is formed.

On the basis of the above, an embodiment of the present invention further provides a high-voltage cable 100, which is prepared by any of the preparation methods described above. Referring to FIG. 3, the high-voltage cable 100 includes a cable core, and an outer surface of the cable core is wrapped with a smooth metal sheath layer 7 and a sheath in sequence along an axial direction of the cable core, and the sheath is a modified polyvinyl chloride sheath 9. The modified polyvinyl chloride sheath 9 is wrapped around the outer surface of the smooth metal sheath layer 7 and bonded to the smooth metal sheath layer 7. The modified polyvinyl chloride sheath 9 is prepared from modified polyvinyl chloride, and the modified polyvinyl chloride includes polyvinyl chloride and a filler added to the polyvinyl chloride;
using 100 parts by weight of polyvinyl chloride as a base material, the filler includes the following ingredients in parts by weight: 1-2 parts of polyethylene, 2-3 parts of filling agent, 2-3 parts of lubricant and 2-5 parts of toughening agent.

In this way, through the provision of the modified polyvinyl chloride sheath 9, the flame retardant rating of the high-voltage cable 100 can be improved, so that the high-voltage cable 100 of the present invention can easily pass the Bundled Burning Test-Category A of the high-voltage cable 100 to meet the requirements for improving the flame retardant performance of the high-voltage cable 100, so that the high-voltage cable 100 of the embodiments of the present invention can be applied to places requiring higher flame retardant ratings, such as tunnels and cable trenches, thereby avoiding the occurrence of fire and improving the safe operation of the power grid.

Where, a mass ratio of polyethylene, filling agent, lubricant and toughening agent in the filler is 1:2:2:4, 1:2:3:3 or 2:3:2:2.

It should be noted that the composition, proportion and preparation process of the filler in the modified polyvinyl chloride, the preparation process of the modified polyvinyl chloride sheath 9, the structure of the smooth metal sheath layer 7 and the structure of the cable core may refer to the relevant descriptions above, and no further description is repeated here. In addition, since the high-voltage cable 100 is prepared by the preparation method of the high-voltage cable in the above embodiments, it at least has all the beneficial effects brought by the technical solution of the preparation method in the above embodiments, which are not described one by one herein.

Referring to FIG. 3, the high-voltage cable 100 further includes a hot melt adhesive layer 8, which is located between the smooth metal sheath layer 7 and the modified polyvinyl chloride sheath 9 to bond the modified polyvinyl chloride sheath 9 and the smooth metal sheath layer 7. The hot melt adhesive layer 8 is an adhesive layer formed by a polyester hot melt adhesive; and the polyester hot melt adhesive is a polyester adhesive formed by subjecting a thermoplastic polyester to an alcoholysis treatment, an acetification treatment, a heating treatment and a cooling treatment in sequence. In this way, the modified polyvinyl chloride sheath 9 can be tightly bonded to the smooth metal sheath layer 7, such as a smooth aluminum sheath, as a whole via the hot melt adhesive layer 8. On the basis of realizing the wrapping of the modified polyvinyl chloride sheath 9 around the outer surface of the smooth metal sheath layer 7, the overall bending performance of the high-voltage cable 100 can also be improved.

It should be noted that the preparation process of the polyester hot melt adhesive and the formation method of the hot melt adhesive layer 8 may refer to the relevant descriptions above, and will not be repeated in detail here.

Referring to FIG. 3, the outer surface of the cable core is further wrapped with a semi-conductive buffer layer along the axial direction of the cable core, and the semi-conductive buffer layer is a semi-conductive elastomer buffer layer 6. The cable core includes an insulation shielding layer 5, and the smooth metal sheath layer 7 is in contact with the insulation shielding layer 5 via the semi-conductive elastomer buffer layer 6. Since the semi-conductive elastomer buffer layer 6 has a certain elasticity, during the production process of the high-voltage cable 100, the semi-conductive elastomer buffer layer 6 can effectively fill the gap between the smooth metal sheath layer 7 and the insulation shielding layer 5, which can not only achieve the effect of longitudinal water blocking, but also make the smooth metal sheath layer 7 tightened to the outer surface of the insulation shielding layer 5, ensuring that the smooth metal sheath layer 7 is in close contact with the insulation shielding layer 5, and ensuring continuous and frequent electrical contact between the smooth metal sheath layer 7 and the insulation shielding layer 5.

It should be noted that the rated voltage of the high-voltage cable 100 of the present invention may be greater than or equal to 66kV and less than or equal to 550kV.

The high-voltage cable 100 provided by the present invention realizes the application of PVC as a sheath material in the high-voltage cable 100, which not only greatly improves the flame retardant performance of the high-voltage cable 100, but also ensures that the smooth metal sheath layer 7 does not wrinkle after the high-voltage cable 100 of the present invention is bent during winding, exhibiting excellent bending performance. In addition, the safe and reliable operation of the high-voltage cable 100 during use in the power grid system can also be enhanced.

In the description of the present invention, it should be understood that the orientation or positional relationships indicated by the terms "center", "longitudinal", "lateral", "length", "width", "thickness", "up", "down", "front", "back", "left", "right", "vertical", "horizontal", "top", "bottom", "inside", "outside" and the like, are the orientations or positional relationships based on the orientations or positional relationships shown in the drawings, which are merely for the convenience of describing the present invention and simplifying the description, rather than indicating or implying that the referred device or element should have a specific orientation, or be constructed and operated in a specific orientation, and thus shall not be construed as limiting the present invention.

In the description of the present invention, it should be understood that the terms "include" and "have" and any variations thereof as used herein are intended to cover non-exclusive inclusions. For example, a process, method, display structure, product or apparatus including a series of steps or units is not necessarily limited to those steps or units explicitly listed, but may include other steps or units not explicitly listed or inherent to such process, method, product or apparatus.

Unless otherwise expressly specified and limited, the terms "installed", "attached", "connected", "fixed", etc. should be understood in a broad sense. For example, it may be a fixed connection, a detachable connection, or be integral; it may be a direct connection, or an indirect connection through an intermediate medium; it may be internal communication between two elements or an interaction relationship between two elements. For those skilled in the art, the specific meanings of the above terms in the present invention may be understood according to specific circumstances. In addition, the terms "first", "second", etc. are used for descriptive purposes only and shall not be construed as indicating or implying relative importance or implicitly indicating the quantity of technical features indicated.

Finally, it should be noted that the above embodiments are only used for illustrating the technical solutions of the present invention, rather than to limit them. Although the present invention has been described in detail with reference to the aforementioned embodiments, those skilled in the art should understand that they can still modify the technical solutions described in the aforementioned embodiments, or make equivalent substitutions for some or all of the technical features thereof; and these modifications or substitutions do not make the essence of the corresponding technical solutions depart from the scope of the technical solutions of the embodiments of the present invention.

## Claims

1. A preparation method of a high-voltage cable, comprising:
preparing modified polyvinyl chloride, wherein the modified polyvinyl chloride comprises polyvinyl chloride and a filler added to the polyvinyl chloride, and with 100 parts by weight of polyvinyl chloride as a base material, the filler comprises the following ingredients in parts by weight: 1-2 parts of polyethylene, 2-3 parts of a filling agent, 2-3 parts of a lubricant and 2-5 parts of a toughening agent;
extruding and wrapping the modified polyvinyl chloride around an outer surface of a smooth metal sheath layer to form a modified polyvinyl chloride sheath, the modified polyvinyl chloride sheath being bonded to the smooth metal sheath layer; wherein the smooth metal sheath layer is wrapped around an outer surface of a cable core.

2. The preparation method according to claim 1, wherein the preparing modified polyvinyl chloride specifically comprises:
with 100 parts by weight of polyvinyl chloride as the base material, adding the filler, wherein a mass ratio of the polyethylene, the filling agent, the lubricant and the toughening agent in the filler is 1:2:2:4, 1:2:3:3 or 2:3:2:2.

3. The preparation method according to claim 2, wherein the extruding and wrapping the modified polyvinyl chloride around an outer surface of a smooth metal sheath layer to form a modified polyvinyl chloride sheath specifically comprises:
extruding and wrapping the modified polyvinyl chloride around the outer surface of the smooth metal sheath layer by an extruder to form the modified polyvinyl chloride sheath;
wherein during extrusion process, by adjusting a barrel heating temperature and a head heating temperature of the extruder, the extruder is controlled to reach a melting temperature of the modified polyvinyl chloride when extruding the modified polyvinyl chloride.

4. The preparation method according to claim 3, wherein the melting temperature of the modified polyvinyl chloride is greater than or equal to 175°C and less than or equal to 185°C;
the barrel heating temperature of the extruder is greater than or equal to 160°C and less than or equal to 180°C, and the head heating temperature of the extruder is greater than or equal to 180°C or equal to 200°C.

5. The preparation method according to any one of claims 1 to 4, wherein
before the extruding and wrapping the modified polyvinyl chloride around the outer surface of the smooth metal sheath layer to form the modified polyvinyl chloride sheath, the preparation method further comprises:
preparing polyester hot melt adhesive;
extruding and wrapping the polyester hot melt adhesive around the outer surface of the smooth metal sheath layer to form a hot melt adhesive layer, wherein the modified polyvinyl chloride sheath is bonded to the smooth metal sheath layer via the hot melt adhesive layer.

6. The preparation method according to claim 5, wherein the preparing polyester hot melt adhesive specifically comprises:
subjecting a thermoplastic polyester to an alcoholysis treatment, an acetification treatment, a heating treatment and a cooling treatment in sequence to form the polyester hot melt adhesive.

7. The preparation method according to claim 6, wherein the alcoholysis treatment is an alcoholysis performed by adding an alcoholysis solution to the thermoplastic polyester;
based on 100 parts by weight of the thermoplastic polyester, the alcoholysis solution comprises the following ingredients in parts by weight: 20 parts of the alcohol solution and 2-3 parts of a first catalyst.

8. The preparation method according to claim 6, wherein the acetification treatment comprises adding an acidolysis solution to a material that has completed the alcoholysis treatment, and heating until the material in the acetification treatment is completely dissolved;
based on 100 parts by weight of the thermoplastic polyester, the acidolysis solution comprises the following ingredients in parts by weight: 80 parts of an acid solution, 4-6 parts of a second catalyst and 2-4 parts of a first antioxidant.

9. The preparation method according to any one of claims 1 to 4, wherein before the extruding and wrapping the modified polyvinyl chloride around an outer surface of a smooth metal sheath layer to form a modified polyvinyl chloride sheath, the preparation method further comprises:
preparing an elastic buffer material having semi-conductive property; and
extruding and wrapping the elastic buffer material around an outer surface of an insulation shielding layer of the cable core to form a semi-conductive elastomer buffer layer, wherein the semi-conductive elastomer buffer layer is wrapped between the insulation shielding layer and the smooth metal sheath layer.

10. The preparation method according to claim 9, wherein the preparing an elastic buffer material having semi-conductive property specifically comprises:
mixing the following raw materials in parts by weight: 100 parts of elastomer rubber, 20 parts of a rubber-plastic foaming material, 35-40 parts of styrene-butadiene rubber, 25-30 parts of a filling and reinforcing agent, and 2-5 parts of a second antioxidant to prepare the elastic buffer material.

11. The preparation method according to claim 10, wherein the elastomer rubber is a rubber formed by a copolymer of ethylene, propylene and a non-conjugated diene, the rubber-plastic foaming material is a plastic formed by copolymerization of ethylene and acetic acid, and the filling and reinforcing agent is carbon black.

12. A high-voltage cable, prepared by the preparation method according to any one of claims 1 to 11, wherein the high-voltage cable comprises a cable core, the cable core has an outer surface wrapped with a smooth metal sheath layer and a sheath in sequence along an axial direction of the cable core, the sheath is a modified polyvinyl chloride sheath, the modified polyvinyl chloride sheath is wrapped around an outer surface of the smooth metal sheath layer and bonded to the smooth metal sheath layer; the modified polyvinyl chloride sheath is prepared from modified polyvinyl chloride, and the modified polyvinyl chloride comprises polyvinyl chloride and a filler added to the polyvinyl chloride;
using 100 parts by weight of polyvinyl chloride as a base material, the filler comprises the following ingredients in parts by weight: 1-2 parts of polyethylene, 2-3 parts of a filling agent, 2-3 parts of a lubricant and 2-5 parts of a toughening agent.

13. The high-voltage cable according to claim 12, further comprising a hot melt adhesive layer, wherein the hot melt adhesive layer is located between the smooth metal sheath layer and the modified polyvinyl chloride sheath to bond the modified polyvinyl chloride sheath and the smooth metal sheath layer; the hot melt adhesive layer is an adhesive layer formed by a polyester hot melt adhesive, and the polyester hot melt adhesive is a polyester adhesive formed by subjecting a thermoplastic polyester to an alcoholysis treatment, an acetification treatment, a heating treatment and a cooling treatment in sequence.

14. The high-voltage cable according to claim 13, wherein the outer surface of the cable core is also wrapped with a semi-conductive elastomer buffer layer along the axial direction of the cable core, the cable core comprises an insulation shielding layer, and the smooth metal sheath layer is in contact with the insulation shielding layer via the semi-conductive elastomer buffer layer.
